# EUROPEAN PATENT SPECIFICATION

(11) **EP 1 921 115 B1**
(45) Date of publication and mention of the grant of the patent: **24.02.2010**
(21) Application number: 06291755.4
(22) Date of filing: 10.11.2006
(51) Int. Cl.: C09B 29/32, G11B 7/246, G11B 7/249

(54) **Use of 3-hydroxy-cyclohex-2-enone azo based dyes in optical layers**
Verwendung von Azofarbstoffen basierend auf 3-Hydroxyzyklohex-2-enon in optischen Schichten
Utilisation de colorants azoiques à base de 3-hydroxycyclohex-2-enone dans des couches optiques

(43) Date of publication of application: 14.05.2008
(73) Proprietor: Clariant Finance (BVI) Limited, Road Town, Tortola (VG)
(72) Inventor: Steffanut, Pascal, F-68128 Village-Neuf (FR); Graciet, Jean-Christophe, F-68128 Village-Neuf (FR); Lücke, Lars, D-65719 Hofheim Am Taunus (DE); Klein, Cédric, F-67170 Brumath (FR); Winter, Martin, Alexander, D-79400 Kandern (DE)
(74) Representative: Paczkowski, Marcus

(56) References cited:
- EP-A- 1 624 029
- WO-A-2006/061398
- WO-A-2006/082229
- DE-A1-102004 043 826
- FR-A- 1 432 883
- US-A- 3 781 428
- DATABASE WPI Week 200535 Derwent Publications Ltd., London, GB; AN 2005-334300 XP002434948 & CN 1 562 987 A (SHANGHAI PRECISION OPTICAL INSTR INST) 12 January 2005 (2005-01-12) & CN 1 562 987 A (SHANGHAI PRECISION OPTICAL INSTR INST) 12 January 2005 (2005-01-12)

## Description

The present invention relates to the use of 3-hydroxy-cyclohex-2-enone azo based dyes and/or of azo metal complex dyes made thereof in optical layers for optical data recording, preferably for optical data recording using a laser with a wavelength up to 450 nm.

The invention further relates to a write once read many (WORM) type optical data recording medium capable of recording and reproducing information with radiation of blue laser, which employs a 3-hydroxy-cyclohex-2-enone azo based dye and/or an azo metal complex dye made thereof in the optical layer.

Recently, organic dyes have attracted considerable attentions in the field of diode-laser optical data storage. WORM type optical data recording media like commercial recordable compact discs (CD-R) and recordable digital versatile discs (DVD-R) can contain in the recording layer dyes based on phthalocyanine, hemicyanine, cyanine and metallized azo structures. These dyes are suitable in their respective fields with the laser wavelength criteria. Other general requirements for dye media are strong absorption, high reflectance, high recording sensitivity, enhancement of photosensitivity, low thermal conductivity as well as light and thermal stabilities, durability for storage or non-toxicity. Important criteria are also good read-out stability, which means high number of cycles at a given intensity of laser-light, and sufficient solubilities of the dyes in the organic solvents generally applied in the spin coating process.

At the recorded region of such an organic dye type optical data recording medium, the optical properties have been changed not only by a change in the optical characteristics and a decrease in the layer thickness resulting from the thermal decomposition of the dye, but also by a deformation of the substrate.

This recording principle is the same for CD-R and DVD-R, the difference remaining the spot size and the wavelength of the laser light used. CD-R are writable at a wavelength of from 770 to 830 nm and DVD-R, by using more recent compact high-performance red diode lasers, at a wavelength from 600 to 700 nm achieving then a 6- to 8 fold improvement in data packing density in comparison with conventional CDs.

However, considering factors such as the recent spread of electronic networks (e.g. Internet) and the emergence of high definition television (HDTV) broadcasting, inexpensive and convenient recording media, capable of recording image information at even larger capacity, are required. While DVD-R's sufficiently serve as high-capacity recording media at present, demand for larger capacity and higher density has increased.

Blu-ray^{®} discs (Blu-ray^{®} disc is a standard developed by Hitachi Ltd., LG Electronics Inc., Matsushita Electric Industrial Co. Ltd., Pioneer Corporation, Royal Philips Electronics, Samsung Electronics Co. Ltd., Sharp Corporation, Sony Corporation, Thomson Multimedia) or HD-DVD discs (a standard developed by Toshiba and NEC) are going to be the next milestone in optical data recording technology. By these new specifications the data storage may be increased up to 27 Gigabytes per recording layer for a 12 cm diameter disc. By adopting a blue diode laser with a wavelength of 405 nm (GaN or SHG laser diodes), the pit size and track interval can be further reduced, again increasing the storage capacity by an order of magnitude.

The construction of such optical data recording media is known in the art. The optical recording medium comprises preferably a substrate with a guide groove for laser beam tracking, a recording layer, also called optical layer, containing an organic dye as the main component, a reflective layer and a protective layer. When recording/readout is carried out through the substrate, a transparent substrate is employed. As such a transparent substrate, one made of a resin such as polycarbonate, polymethacrylate or amorphous polyolefin, one made of glass or one having a resin layer made of radiation curable resin, i.e. photopolymerizable resin, formed on glass, may, for example, be employed. Advanced optical data recording media may comprise further layers, such as protective layers, adhesive layers or even additional optical recording layers.

For blue diode-laser optical data storage a variety of dye compounds has been proposed in the literature.
CN 1562987 discloses metal azo dyes based on thiazole moieties.

WO 2006/061398 A2 discloses pyridin N-oxide based dyes, EP 1 624 029 A1 discloses pyridinium based dyes, and WO 2006/082229 A2 discloses 4-aminoantipyrine based dyes, each for use in optical layers for optical data recording.
Unfortunately the dye compounds described so far still show disadvantages which impede their satisfactory use as dyes for optical data storage.

There is a still a need for an optical data recording medium that is capable of recording data at high density with improved recording characteristics and with improved read-out stabilities.

Surprisingly the object was achieved by using 3-hydroxy-cyclohex-2-enone azo based dyes and azo metal complex dyes made with as described below.

In the following text "halogen" represents F, Cl, Br or I, preferably F, Cl or Br, more preferably F or Cl, even more preferably Cl, if not otherwise stated; "alkyl" represents linear and branched alkyl; and "alkoxy" represents linear and branched alkoxy; any alkyl and cycloalkyl groups being unsubstituted, partially or completely substituted by halogen; if not otherwise stated.
Subject of the invention is the use of a compound of formula (I), 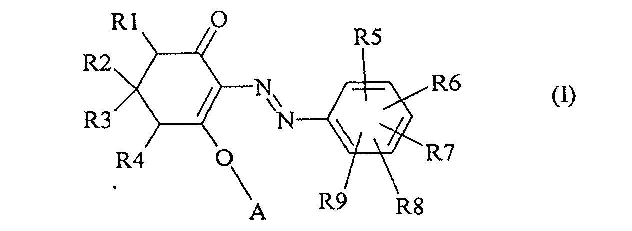 wherein
- A: represents H or a group of formula (II); 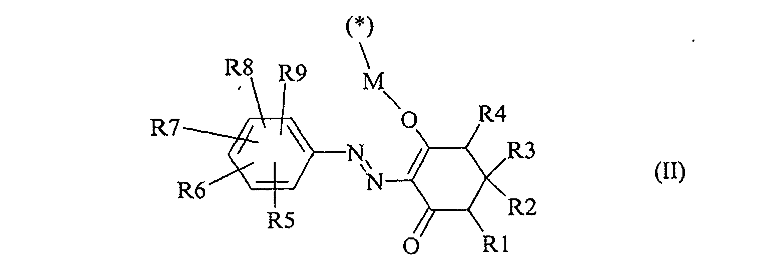
- M: represents a divalent metal atom, preferably selected from main groups 1, 2, 3, 4 or 5 or from transition groups 1 or 2 or 4, 5, 6, 7 or 8 of the Periodic Table of the Chemical Element;(*) in formula (II) denotes the bond of the divalent metal atom M to the O atom in formula (I);R¹ and R⁴ are independently from each other selected from the group consisting of H, CN, CF₃, NO₂, SO₂-NR²³R²⁴, CO-R²¹, SO₂R²¹, CO-NR²³R²⁴;
- R²: and R³ are independently from each other selected from the group consisting of H, C₁₋₁₀ alkyl, C₅₋₁₀ cycloalkyl and phenyl, the phenyl residue being unsubstituted or substituted by 1 to 4 substituents, the substituents being independently from each other selected from the group consisting of OH, halogen, CN, CF₃, NO₂, C₁₋₁₀ alkyl, C₅₋₁₀ cycloalkyl and C₁₋₁₀ alkoxy;
- R⁵,: R⁶, R⁷, R⁸ and R⁹ are independently of from each other selected from the group consisting of H, OH, halogen, CN, NO₂, C₁₋₁₂ alkyl, C₆₋₁₀aryl, NR²³R²⁴, C₆₋₁₀ heteroaryl, the C₆₋₁₀ heteroaryl residue having with 1, 2 or 3 heteroatoms independently from each other selected from the group consisting of O, N and S,
O- C₁₋₁₂ alkyl, S-C₁₋₁₂ alkyl, O-C₁₋₁₂ aryl, S-C₁₋₁₂ aryl, SO₂R²¹, SO₂-NR²³R²⁴, COR²¹, CO-NR²³R²⁴ and NHCOR²¹;
- R²¹: are independently from each other selected from the group consisting of OH, C₁₋₆ alkyl, C₆₋₁₀ aryl and O-C₁₋₆ alkyl;
- R²³ and R²⁴: are independently from each other selected from the group consisting of H, C₁₋₆ alkyl, C₆₋₁₀ aryl and C₁₋₁₂ alkyl- NR²³R²⁴;
in an optical layer for optical data recording.

Preferably,
- M: is a divalent metal atom selected from the group consisting of Mg, Ca, Sr, Ba, Mn, Cu, Ni, Co, Zn and Fe
- R¹ and R⁴: are independently from each other selected from the group consisting of H, CN, CF₃ and CO-R²¹;
- R² and R³: are independently from each other selected from the group consisting of H, C₁₋₄ alkyl and phenyl;
- R⁵, R⁶, R⁷, R⁸ and R⁹: are independently of from each other selected from the group consisting of H OH, F, Cl, Br, CN, N02, C₁₋₄ alkyl, phenyl, NR²³R²⁴, O-C₁₋₄ alkyl, O-phenyl, SO₂R²¹, SO₂-NR²³R²⁴, COR²¹ and CO-NR²³R²⁴;
- R²¹: are independently from each other selected from the group consisting of OH, C₁₋₄ alkyl, phenyl and O-C₁₋₄ alkyl;
- R²³ and R²⁴: are independently from each other selected from the group consisting of H, C₁₋₄ alkyl, phenyl and C₂₋₆ alkyl- NR²³R²⁴.

More preferably,
- M: is a divalent metal atom selected from the group consisting of Cu, Ni and Co, preferably Cu and Ni;
- R¹ and R⁴: are independently from each other selected from the group consisting of H, CN and CO-R²¹;
- R² and R³: are independently from each other selected from the group consisting of H, methyl, ethyl and phenyl;
- R⁵, R⁶, R⁷, R⁸ and R⁹: are independently of from each other selected from the group consisting of H, OH, F, Cl, Br, CN, NO₂, methyl, ethyl, phenyl, NR²³R²⁴; methoxy, ethoxy, O-phenyl, SO₂R²¹, SO₂-NR²³R²⁴, COR²¹ and CO-NR²³R²⁴;
- R²¹: are independently from each other selected from the group consisting of OH, methyl, ethyl, phenyl, methoxy and ethoxy;
- R²¹: x are independently from each other selected from the group consisting of H, methyl, ethyl, phenyl and C₂₋₃ alkyl- NR²³R²⁴.

Even more preferably, subject of the invention is the use of a compound of formula (1), (2), (3), (4), (5), (6), (7), (8), (9), (10), (11), (12), (13), (14), (15), (16), (17), (18), (19) or (20) 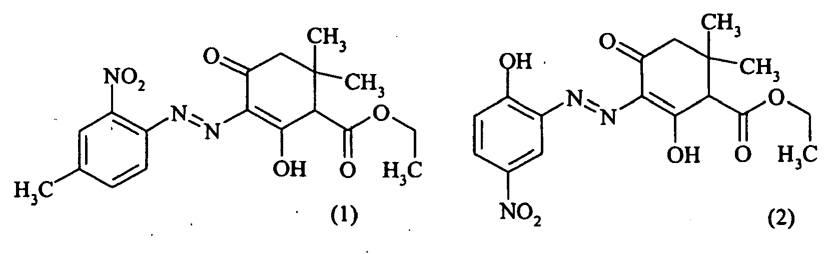 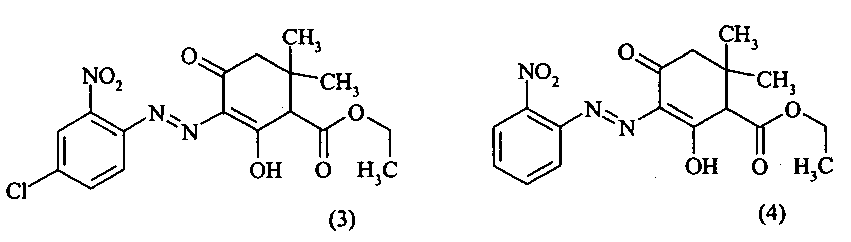 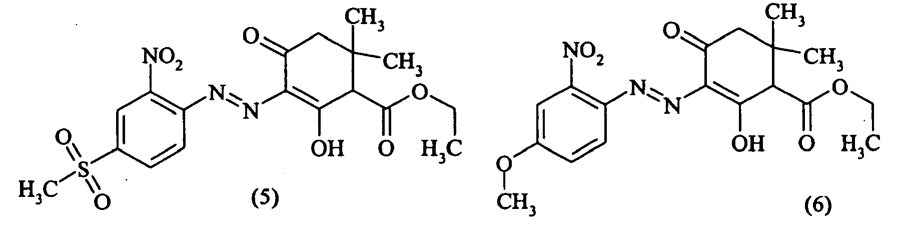 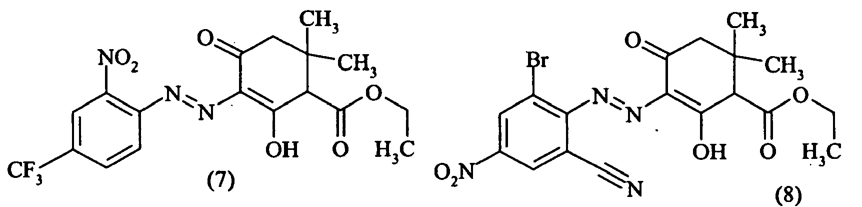 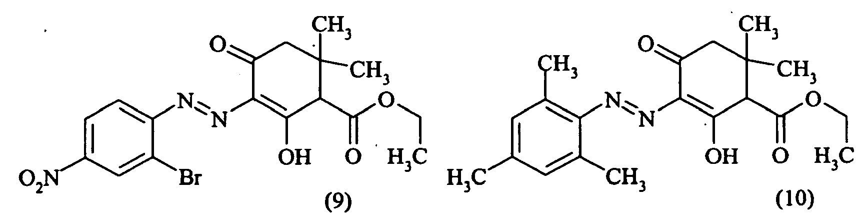 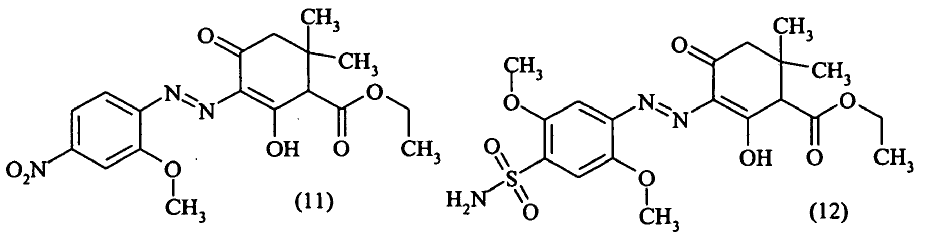 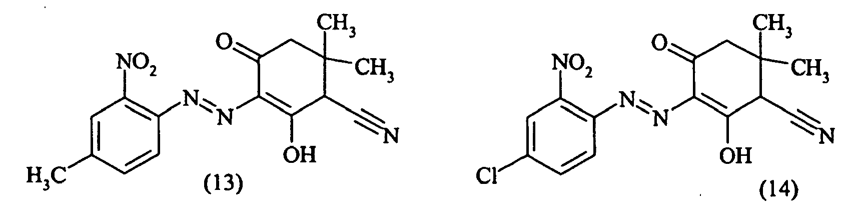 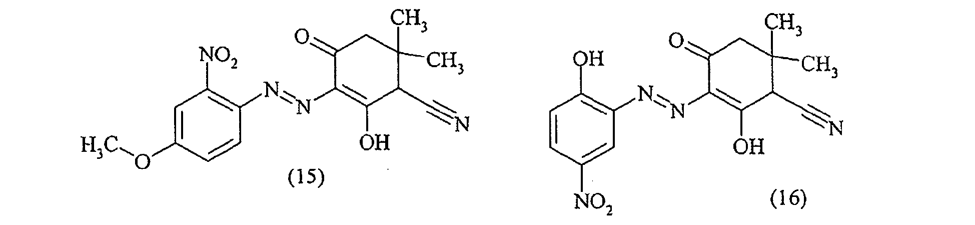 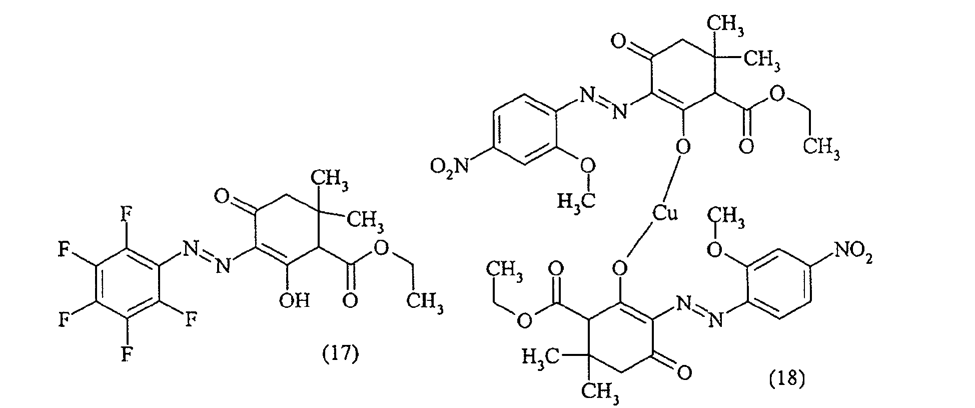 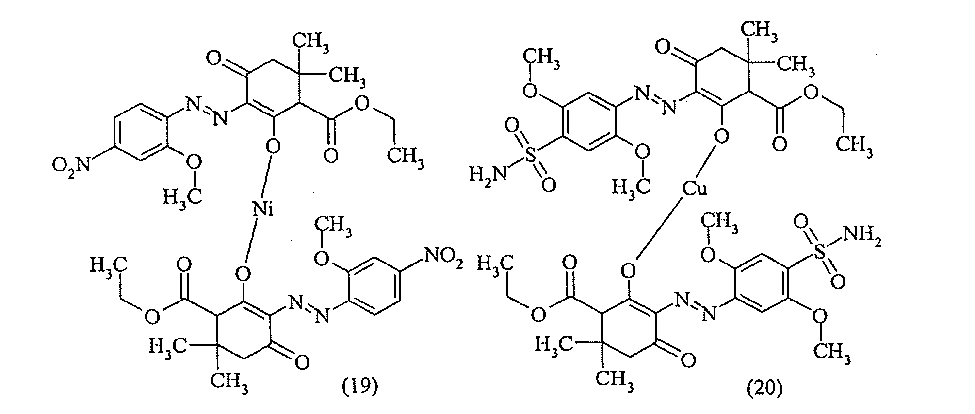 in an optical layer for optical data recording.

A further subject of the invention is the use of a compound of formula (I), the use of a compound of formula (I) in all the preferred aspects of the formula (I) as described above, and more preferably the use of a compound of formula (1), (2), (3), (4), (5), (6), (7), (8), (9), (10), (11), (12), (13), (14), (15), (16), (17), (18), (19) or (20), as a dye in an optical layer for optical data recording.

### Preparation of the compounds of formula (I) with A being H

In the following, the compounds of formula (I) with A being H are called azo ligands. The compounds of formula (I) with A being H and the compounds of formula (1), (2), (3), (4), (5), (6), (7), (8), (9), (10), (11), (12), (13), (14), (15), (16) or (17) are preferably prepared by azo coupling reaction of the respective compound of formula (Ia), also called coupling agent, with the respective compound of formula (Ib), also called diazo component; the compound of formula (Ib) being prepared by diazotization reaction of the respective compound of formula (Ic), also called amine compound; 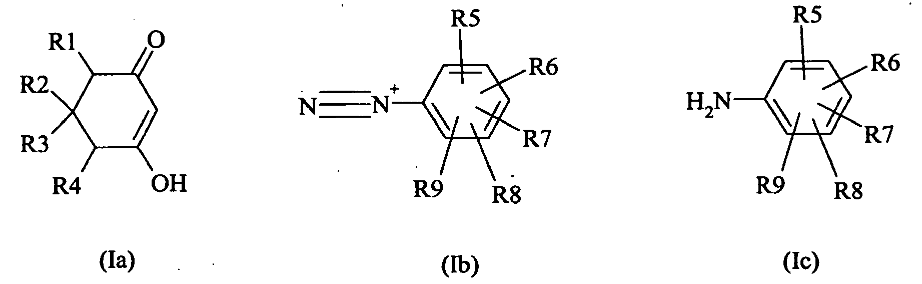 wherein R1 to R9 have the same meaning as described above, also with all their preferred embodiments.
The diazo component has preferably Chloride Cl- as counter ion, since the diazotization reaction of the amine compound usually is done in aqueous hydrochloride acid.
The amine compounds and the coupling agents are known substances.
It is possible to use more than one amine component and/or more than one coupling agent resulting in the respective mixture of the azo ligands.

The azo coupling reaction is carried out in water, non-aqueous solvents and in mixtures thereof. Non-aqueous solvents are preferably selected from the group consisting of alcohols, more preferably methanol, ethanol, propanol, butanol, pentanol, dipolar aprotic solvents, preferably DMF, DMSO and NMP, and water-immiscible solvents, preferably toluene or chlorobenzene. More preferably the azo coupling reaction is carried out in water.

The azo coupling reaction is preferably carried out in a stoichiometric ratio of coupling component and diazo component. The azo coupling reaction is generally done at temperatures between -30°C to 100°C, preference being given to temperatures of -10°C to 30°C, and particular preference to temperatures of -5°C to 20°C.
The azo coupling reaction may be carried out in an acidic as well as an alkaline medium. Preference is given to pH < 10, particular preference to pH 3 to 9.

Preferably the azo ligand is isolated following standard methods, in case of a precipitate preferably by filtration, and preferably dried.

### Preparation of the compounds of formula (I) with A being a group of formula (II)

Preferably, the compounds of formula (I) with A being a group of formula (II) are prepared by complexing reaction of one equivalent of a divalent metal salt, preferably selected from main groups 1, 2, 3, 4 or 5 or from transition groups 1 or 2 or 4, 5, 6, 7 or 8 of the Periodic Table of the Chemical Elements, preferably in form of a solution, with two equivalents of a compound of formula (I) with A being H, i.e. of the respective azo ligand; particularly the compounds of formulae (18), (19) and (20) are prepared accordingly using the respective compounds of formulae (11) or (12) and a respective metal salt, the metal salt being selected from one of the Ni or Cu salts described below.

It is possible to use more than one metal salt, preferably a mixture of 2 or 3 metal salts, preferably in the required stoichiometric amounts with regard to the azo ligand.
The azo ligand can be added to the metal salt or vice versa.

The complexing reaction can be carried out in suspension or in solution, preferably in suspension, preferably at elevated temperature, more preferably at the boiling point of the solvent.

The complexing reaction usually results in a precipitate; the precipitate is isolated following standard methods, preferably by filtration.

The solvents that can be used in the complexing reaction are water, solvents and mixtures thereof. The solvents are preferably selected from the group consisting of C₁₋₈ alcohols, nitriles, preferably acetonitrile, ketones, preferably acetone, aromatic solvents, preferably toluene or chlorobenzene, and dipolar aprotic solvents, preferably DMF, DMSO and NMP.
More preferred solvents are C₁₋₈ alcohols, especially ethanol, and acetonitrile.

It is also possible to add the metal salt already at an earlier stage of the synthesis of the azo ligand or their precursors, preferably before, during or after the azo coupling reaction, more preferably after the azo coupling reaction to the resulting suspension or solution of the azo ligand.
Even more preferably the azo ligand is isolated and dried after synthesis, and the complexing reaction is carried out in a separate step.

Preferably the azo ligand is present as a suspension in the complexing reaction.

The complexing reaction is generally done at temperatures between 20°C to 200°C, preferably at temperatures between 50°C to 170°C, particularly preferably at temperatures between 80°C to 150°C, further particularly preferably the complexing reaction is carried out at reflux temperature and at atmospheric pressure.
Preferably the compound of formula (I) with A being a group of formula (II) is isolated following standard methods, usually they form a precipitate which is isolated, preferably by filtration, and dried.

The divalent metal salt is derived from a metal preferably selected from the group consisting of Mg, Ca, Sr, Ba, Mn, Cu, Ni, Co, Zn, and Fe, more preferably of Cu, Ni, and Co. Salts of the divalent metal are preferably sulfates, halides (preferably fluoride, chloride, bromide, iodide, more preferably chloride and bromide, especially chlorides) and acetates and their respective hydrates.
More preferred metal salts are cobalt-, nickel- or copper-sulfate; cobalt-, nickel- or copper- halide, preferably -chloride; cobalt-, nickel- or copper-acetate, and their respective hydrates, especially the metal salt is selected from the group consisting of Cu(SO₄)₂, Cu(SO₄)₂*5 H₂O, CuCl₂, Ni(OAc)₂, Ni(OAc)₂*4 H₂O, NiCl₂*6 H₂O, Co(SO₄)₂ and CoSO₄*7H₂O; preferably from the group consisting of Ni(OAc)₂, Cu(SO₄)₂*5 H₂O CuCl₂, Co(SO₄)₂ and CoSO₄*7H₂O, more preferably from Ni(OAc)₂, CuCl₂ and Cu(SO₄)₂*5 H₂O.

A further subject of the invention is a process for the preparation of the compounds of formula (I) with A in formula (I) being a group of formula (II), as well as of the compounds of formula (I) with A in formula (I) being a group of formula (II) in all the preferred aspects as described above, particularly of the compounds of formula (18), (19) and (20), by a complexing reaction of a compound of the formula (I) with A in formula (I) being H, i.e. the azo ligand, particularly of a compound of formula (11) or (12), with a divalent metal salt, particularly with a Ni or Cu salt.
A further subject of the invention is a process for the preparation of the compound of formula (I) with A being H, i.e. of the azo ligands, especially of the compounds of formula (1), (2), (3), (4), (5), (6), (7), (8), (9), (10), (11), (12), (13), (14), (15), (16) or (17), particularly of the compounds of formula (11) or (12), preferably being prepared by an azo coupling reaction of the respective diazo component of formula (Ib), and the respective coupling agent of formula (Ia); with the compound of formula (Ib) being prepared from the respective compound of formula (Ic) by a diazotization reaction.

A further subject of the invention is a compound of formula (1), (2), (3), (4), (5), (6), (7), (8), (9), (10), (11), (12), (13), (14), (15), (16), (17), (18), (19) or (20);
a further subject of the invention is the use of a compound of formula (1), (2), (3), (4), (5), (6), (7), (8), (9), (10), (11), (12), (13), (14), (15), (16) and (17) as a ligand,
preferably as a ligand in azo metal complex dyes.

A further subject of the present invention is an optical layer comprising at least one compound of formula (I), with the compound of formula (I) also in all its described embodiments, particularly at least one compound of formula (1), (2), (3), (4), (5), (6), (7), (8), (9), (10), (11), (12), (13), (14), (15), (16), (17), (18), (19) or (20), and the use of said optical layer for optical data recording media. An optical layer according to the invention may also comprise a mixture of two or more, preferably of two or three, more preferably of two compounds of formula (I). A further subject of the invention therefore is an optical data recording medium comprising an optical layer comprising at least one compound of formula (I).

Further, the invention relates to a method for producing optical layers on a substrate comprising the following steps
(a) providing a substrate,
(b) dissolving at least one compound of formula (I), particularly at least one compound of formula (1), (2), (3), (4), (5), (6), (7), (8), (9), (10), (11), (12), (13), (14), (15), (16), (17), (18), (19) or (20), in an organic solvent to form a solution,
(c) coating the solution (b) on the substrate (a),
(d) evaporating the solvent to form an optical layer (also called dye layer or recording layer).

### (a) Substrate

The substrate, which functions as support for the layers applied thereto, is advantageously semi-transparent (transmittance T>10%) or preferably transparent (transmittance T>90%). The support can have a thickness of from 0.01 to 10 mm, preferably from 0.1 to 5 mm.
Suitable substrates are, for example, glass, minerals, ceramics and thermosetting or thermoplastic plastics. Preferred supports are glass and homo- or co-polymeric plastics. Suitable plastics are, for example, thermoplastic polycarbonates, polyamides, polyesters, polyacrylates and polymethacrylates, polyurethanes, polyolefins, polyvinyl chloride, polyvinylidene fluoride, polyimides, thermosetting polyesters and epoxy resins. The most preferred substrates are polycarbonate (PC) or polymethylmethacrylate (PMMA).
The substrate can be in pure form or may also comprise customary additives, for example UV absorbers as light-stabilizers for the optical layer.
The substrate is advantageously transparent over at least a portion of the range from 350 to 500 nm, so that it is permeable to at least 90% of the incident light of the writing or readout wavelength.

### (b) Organic solvents

Organic solvents are selected from C₁₋₈ alcohol, halogen substituted C₁₋₈ alcohols, C₁₋₈ ketone, C₁₋₈ ether, halogen substituted C₁₋₄ alkane, nitriles, preferably acetonitrile, or amides, or mixtures thereof.

Preferred C₁₋₈ alcohols or halogen substituted C₁₋₈ alcohols are for example methanol, ethanol, isopropanol, diacetone alcohol (DAA), 2,2,3,3-tetrafluoropropanol, trichloroethanol, 2-chloroethanol, octafluoropentanol or hexafluorobutanol, more preferred 2,2,3,3-tetrafluoro-1-propanol.
Preferred C₁₋₈ ketones are for example acetone, methylisobutylketone, methylethylketone, or 3-hydroxy-3-methyl-2-butanone.
Preferred halogen substituted C₁₋₄ alkanes are for example chloroform, dichloromethane or 1-chlorobutane.
Preferred amides are for example dimethylformamide or dimethylacetamide.

### (c) Coating methods

Suitable coating methods are, for example, immersion, pouring, brush-coating, blade-application and spin-coating, as well as vapor-deposition methods carried out under a high vacuum. When pouring methods are used, solutions in organic solvents are generally used. When solvents are employed, care should be taken that the supports used are insensitive to those solvents. The optical layer is preferably applied by spin-coating with a dye solution.

### (d) Optical layer (also called dye layer or recording layer)

The optical layer is preferably arranged between the transparent substrate and the reflecting layer. The thickness of the recording layer is from 10 to 1000 nm, preferably from 30 to 300 nm, more preferably from 70 to 250 nm, especially about 80 nm, for example from 60 to 120 nm.
The optical layer comprises a compound of formula (I) preferably in an amount sufficient to have a substantial influence on the refractive index, for example at least 30% by weight of the total weight of the optical layer, more preferably at least 60% by weight, most preferably at least 80% by weight.
Further customary components are stabilizers, for example ¹0₂-, triplet- or luminescence quenchers, melting-point reducers, decomposition accelerators or any other additives that have already been described in optical data recording media. Preferably, stabilizers or fluorescence-quenchers are added if desired.
Stabilizers, ¹0₂-, triplet- or luminescence-quenchers are, for example, metal complexes ofN- or S-containing enolates, phenolates, bisphenolates, thiolates or bisthiolates, hindered phenols and derivatives thereof such as o-hydroxyphenyl-triazoles or -triazines or other UV absorbers, such as hindered amines (TEMPO or HALS, as well as nitroxides or NOR-HALS), and also as cations diimmonium, Paraquat^{™} or Orthoquat salts, such as ^{®}Kayasorb IRG 022, ^{®}Kayasorb IRG 040, optionally also as radical ions, such as N,N,N',N'-tetrakis(4-dibutylaminophenyl)-p-phenylene amine-ammonium hexafluorophosphate, hexafluoroantimonate or perchlorate. The latter are available from Organica (Wolfen/DE); ^{®}Kayasorb brands are available from Nippon Kayaku Co. Ltd. In a preferred aspect, the present invention provides for an optical layer suitable for high-density recording material, e.g. of the WORM disc format, in a laser wavelength range of from 350-450nm, preferably around 405 nm.

### Preparation of the optical data recording medium

A method for producing an optical data recording medium comprising an optical layer according to the invention usually comprises the following additional steps
(e) applying a metal layer (also called reflective layer) onto the optical layer,
(f) applying a second polymer based layer to complete the disk (cover layer or protective layer).

### (e) Reflective layer

The application of the metallic reflective layer is preferably effected by sputtering, vapor-deposition in vacuum or by chemical vapor deposition (CVD). The sputtering technique is especially preferred for the application of the metallic reflective layer. Reflecting materials suitable for the reflective layer include especially metals, which provide good reflection of the laser radiation, used for recording and playback, for example the metals of Main Groups III, IV and V and of the Sub-groups of the Periodic Table of the Elements. Al, In, Sn, Pb, Sb, Bi, Cu, Ag, Au, Zn, Cd, Hg, Sc, Y, La, Ti, Zr, Hf, V, Nb, Ta, Cr, Mo, W, Fe, Co, Ni, Ru, Rh, Pd, Os, Ir, Pt, Ce, Pr, Nd, Pm, Sm, Eu, Gd, Tb, Dy, Ho, Er, Tm, Yb and Lu and alloys thereof are especially suitable. Special preference is given to a reflective layer of aluminum, silver, copper, gold or an alloy thereof, on account of their high reflectivity and ease of production.

### (f) Cover layer (also called protective layer)

Materials suitable for the cover layer include plastics, which are applied in a thin layer to the support or the uppermost layer either directly or with the aid of adhesive layers. The material of the cover layer may for example be the same as the material of the substrate. It is advantageous to select mechanically and thermally stable plastics having good surface properties, which may be modified further.
The plastics may be thermosetting plastics and thermoplastic plastics. Preference is given to radiation-cured (e.g. using UV radiation) protective layers, which are particularly simple and economical to produce. A wide variety of radiation-curable materials are known. Examples of radiation-curable monomers and oligomers are acrylates and methacrylates of diols, triols and tetrols, polyimides of aromatic tetracarboxylic acids and aromatic diamines having C₁-C₄alkyl groups in at least two ortho-positions of the amino groups, and oligomers with dialkylmaleinimidyl groups, e.g. dimethyl maleinimidyl groups.

A high-density optical data recording medium according to the invention therefore preferably is a recordable optical disc comprising: a first substrate, which is a transparent substrate with grooves, a optical layer (recording layer), which is formed on the first substrate surface using the compounds of formula (I), a reflective layer formed on the optical layer, a second substrate, which is a transparent substrate connected to the reflective layer with an attachment layer.

The optical data recording medium according to the invention is preferably a recordable optical disc of the WORM type. It may be used, for example, as a playable HD-DVD (high density digital versatile disc) or Blu-ray^{®} disc, as storage medium for a computer or as an identification and security card or for the production of diffractive optical elements, for example holograms.

The optical data recording media according to the invention may also have additional layers, for example interference layers. It is also possible to construct optical data recording media having a plurality of (for example two) recording layers. The structure and the use of such materials are known to the person skilled in the art. Preferred, if present, are interference layers that are arranged between the recording layer and the reflecting layer and/or between the recording layer and the substrate and consist of a dielectric material of Ti0₂, Si₃N₄, ZnS or silicone resins.
These optical data recording media according to the invention can be produced by processes known in the art.

### Readout methods

The structure of the optical data recording medium according to the invention is governed primarily by the readout method; known function principles include the measurement of the change in the transmission or, preferably, in the reflection, but it is also known to measure, for example, the fluorescence instead of the transmission or reflection.
When the optical data recording medium is structured for a change in reflection, the following structures can be used: transparent support / recording layer (optionally multilayered) / reflective layer and, if expedient, protective layer (not necessarily transparent); or support (not necessarily transparent) / reflective layer / recording layer and, if expedient, transparent protective layer. In the first case, the light is incident from the support side, whereas in the latter case the radiation is incident from the recording layer side or, where applicable, from the protective layer side. In both cases the light detector is located on the same side as the light source. The first-mentioned structure of the recording material to be used according to the invention is generally preferred. When the optical data recording medium is structured for a change in light transmission, the following different structure comes into consideration: transparent support/recording layer (optionally multilayered) and, if expedient, transparent protective layer. The light for recording and for readout can be incident either from the support side or from the recording layer side or, where applicable, from the protective layer side, the light detector in this case always being located on the opposite side.
Suitable lasers are those having a wavelength of 350-500 nm, for example commercially available lasers having a wavelength of 405 to 414 nm, especially semi-conductor lasers. The recording is done, for example, point for point, by modulating the laser in accordance with the mark lengths and focusing its radiation onto the recording layer. It is known from the specialist literature that other methods are currently being developed which may also be suitable for use.

The process according to the invention allows the storage of information with great reliability and stability, distinguished by very good mechanical and thermal stability and by high light stability and by sharp boundary zones of the pits. Special advantages include the high contrast, the low jitter and the surprisingly high signal/noise ratio, so that excellent readout is achieved.
The readout of information is carried out according to methods known in the art by registering the change in absorption or reflection using laser radiation.

The invention accordingly relates also to a method for the optical data recording, storage and playback of information, wherein an optical data recording medium according to the invention is used. The recording and the playback advantageously take place in a wavelength range of from 350 to 500 nm.

The compounds of formula (I) provide for particularly preferable properties when used in optical layers for optical data recording media according to the invention. They possess the required optical characteristics, demonstrated when used in the form of a solid film:
- an advantageously homogeneous, amorphous and low-scattering optical layer,
- a high refractive index at the longer wavelength flank of the absorption band, which preferably achieves n values of the refractive index of from 1.0 to 3.0 in the range of from 350 to 500 nm,
- a high sensitivity under laser radiation of high power density and good playback characteristics in the desired spectral range,
- an enhanced photosensitivity and stability (in daylight and under laser radiation of low power density) compared to dyes already known in the art,
- an uniform script width and a high contrast,
- an absorption maximum (λ max) in the preferred range between 390 nm and 470 nm as being preferred for blue laser applications, more precisely from 400 to 460 nm,
- a decomposition point (DP) in the preferred temperature range between 200°C and 300°C, more precisely 230°C to 290°C
- a sufficient heat release (HR)
Recording performance of a compound is related to specific parameters measured on disc like:
- a low simulated bit error rate (SbER)
- a low inner parity error rate (PI error)
- a high reflectivity (R)
- a low laser recording power (Pw or OPC: optimum power control)
- good readout stability at different laser reading powers.
- an appropriate partial response signal to noise ratio (PRSNR)

The absorption edge is surprisingly steep even in the solid phase.
The compounds of formula (I) also show a narrow decomposition temperature of 200-350°C, fitting with the thermal requirements. Additionally, these compounds show a high solubility in organic solvents, which is ideal for the spin-coating process to manufacture optical layers.

### Examples

### UV-vis

For UV-vis spectra, λ max and ε values of a compound are determined by using an UV-vis spectrophotometer, the compound was dissolved in CH₂Cl₂, DMSO or in tfp. The values are obtained by balancing the measurements performed on compound solutions at three different concentrations.

### Thermal Decomposition: Decomposition point (DP) and heat release (HR)

For the determination of DP and HR, the compound is incorporated into a sealed aluminum pan. Analysis conditions are as following: Temperature range from 25 to 400°C, heating rate 10°C/min, nitrogen flow of 50 ml/min. Values are determined by single measurement.

### Partial response signal to noise ratio (PRSNR)

A definition and the measuring techniques of PRSNR are described in a book available from DVD Format Logo Licensing Co., Ltd. for example, Annex H of Version 0.9, PART 1 Physical Specifications, DVD Specifications for High Density Read-Only Disk.

### Simulated bit error rate (SbER)

A definition and the measuring techniques of SbER are described in a book available from DVD Format Logo Licensing Co., Ltd. for example, Annex H of Version 0.9, PART 1 Physical Specifications, DVD Specifications for High Density Read-Only Disk.

PRSNR and SbER are measured in a state in which information has been recorded in the adjacent tracks.

### Reflectivity (R)

A definition and the measuring techniques for the light reflectivity (R) is described in a book available from DVD Format Logo Licensing Co., Ltd. for example, Annex D of Version 0.9, PART 1 Physical Specifications, DVD Specifications for High Density Read-Only Disk.

### Solubility

The solubility of a compound was determined in 2,2,3,3 tetrafluoropropanol at 25 °C. The solubilities were differentiated into three groups:
- A: Good solubility (> 20 g / L)
- B: Medium solubility (>= 10 and <= 20 g / L)
- C: Poor solubility (<10 g / L)

### Yield

The yield in [%] of the azo coupling reaction for the preparation of the azo ligands was determined based in the molar input of the amine compound.

### Example 1

A mixture of 15.2 g of 4-Amino-5-nitrotoluene, 100 ml of water and 32.2 g of concentrated hydrochloric acid (34% w/w) was gradually admixed with 21ml of sodium nitrite (33% w/v) at 0°C. After 1 hour of reaction at 0°C, the dark diazotization solution was added drop wise to an alkaline solution of 23.4 g of 2-Hydroxy-6,6-dimethyl-4-oxo-cyclohex-2-enecarboxylic acid ethyl ester while maintaining pH at 7.5 to 9 with sodium hydroxide (30% w/w). The batch was stirred 3 hours and then filtered with suction. The precipitate was washed with water and dried. 35.8 g of the compound of formula (1) were obtained (yield 95.4 %).

### Example 2

A mixture of 23.1 g of 2-amino-4-nitrophenol, 300 ml of water and 48.3 g of concentrated hydrochloric acid (34% w/w) was gradually admixed with 37.3 ml of sodium nitrite (33% w/v) at 0°C. After 1 hour of reaction at 0°C, the dark diazotization solution was added drop wise to an alkaline solution of 35.1 g of 2-Hydroxy-6,6-dimethyl-4-oxo-cyclohex-2-enecarboxylic acid ethyl ester while maintaining pH at 7.5 to 9 with sodium hydroxide (30% w/w). The batch was stirred 3 hours and then filtered with suction. The precipitate was washed with water and dried. 49.5 g of the compound of formula (2) were obtained (yield 87.5 %).

### Example 3

A mixture of 17.3 g of 4-chloro-2-nitroaniline, 170 ml of water and 32.2 g of concentrated hydrochloric acid (34% w/w) was gradually admixed with 24.9 ml of sodium nitrite (33% w/v) at 0°C. After 1 hour of reaction at 0°C, the dark diazotization solution was added drop wise to an alkaline solution of 23.4 g of 2-Hydroxy-6,6-dimethyl-4-oxo-cyclohex-2-enecarboxylic acid ethyl ester while maintaining pH at 7.5 to 9 with sodium hydroxide (30% w/w). The batch was stirred 3 hours and then filtered with suction. The precipitate was washed with water and dried. 37.3 g of the compound of formula (3) were obtained (yield 94.2 %).

### Examples 4 to 17

The preparation according to example 1 was done using the respective coupling agent in a stoichiometric ratio with regard to the respective amine component to yield the compounds of formula (4) to (17).
Table A shows the phys-chem properties of the compounds of formulae (1) to (17).

| **Table A** | | | | | | |
|---|---|---|---|---|---|---|
| **Ex.** | **compound** | **Solubility** | **λ max** | **ε (at λ max)** | **Yield** | **DP** |
| | **of formula** | | **[nm]** | **[L / g * cm]** | **[%]** | **[°C]** |
| **1** | (1) | A | 427 | 63 | 95.4 | 282 |
| **2** | (2) | A | 411 | 52 | 87.5 | 253 |
| **3** | (3) | A | 421 | 52 | 94.2 | 274 |
| **4** | (4) | B | 424 | 52 | 56.0 | 238 |
| **5** | (5) | A | 384 | 19 | 51.0 | 200 |
| **6** | (6) | B | 448 | 56 | 99 | 273 |
| **7** | (7) | A | 399 | 32 | 69.7 | 276 |
| **8** | (8) | B | 396 | 55 | 68.0 | 226 |
| **9** | (9) | A | 400 | 72 | 92.0 | 285 |
| **10** | (10) | A | 413 | 55 | 78.8 | 248 |
| **11** | (11) | A | 432 | 44 | 95 | 288 |
| **12** | (12) | A | 438 | 25 | 93.4 | 279 |
| **13** | (13) | C | 442 | 52 | 84.2 | 270 |
| **14** | (14) | A | 437 | 42 | 82 | 222 |
| **15** | (15) | C | 458 | 50 | 86.0 | 154 |
| **16** | (16) | C | 423 | 17 | 67.5 | 249 |
| **17** | (17) | A | 326 | 29 | 24 | 157 |

### Example 18

6.4 g of compound of formula (1), prepared according to example 1, and 1.2 g of sodium acetate were suspended in 70 ml of ethanol. After 15 minutes stirring at reflux, 1.75 g of anhydrous Copper chloride is added to the mixture. After some minutes, a dark brown suspension results. The mixture is heated at reflux for 6 hours and then cooled down to room temperature. The resulting precipitate is filtered off and the press cake washed with deionized water and dried. 6.3 g of the compound of the formula (18) is obtained.

### Examples 19 and 20

The complexing reaction according to example 18 was repeated with the respective metal salts and with the respective compounds of formula (11) to (12), prepared according to examples 11 and 12, to yield compounds of formulae 19 and 20, the combinations and the details are given in table (B).

| **Table B** | | | | | | | |
|---|---|---|---|---|---|---|---|
| **Ex.** | **compound** | **Metal Salt** | **Solubility** | **λ max** | **ε (at λ max)** | **Yield** | **DP** |
| | **of formula** | | | **[nm]** | **[l/g.cm]** | **[%]** | **[°C]** |
| **18** | (18) | CuCl2 | C | 431 | 50 | 76.2 | 276 |
| **19** | (19) | Ni(OAc)2 | A | 442 | 67 | 67.8 | 278 |
| **20** | (20) | CuCl2 | B | 441 | 42 | 92.7 | 314 |

### Application Example 1

The optical and thermal properties of the compounds of formula (I) were studied. The compounds of formula (I) show high absorption at the desired wavelengths. In addition, the shapes of the absorption spectra, that still remain critical to the disc reflectivity and formation of clean mark edges, are composed of one major band, comprised in a range of from 350 to 500 nm.
More precisely, n values of the refractive index were evaluated between 1.0 and 2.7.
Light stabilities were found comparable to commercial dyes which are already stabilized with quenchers for the use in optical data recording.
Sharp threshold of thermal decomposition within the required temperature range characterizes the compounds of formula (I) which are desirable for the application in optical layers for optical data recording.

### Application Example 2 - Optical layer and optical data recording medium

1.4% by weight of the compound of formula (1), prepared according to example 1, are dissolved in 2,2',3,3'-tetrafluoro-1-propanol and the solution is filtered through a Teflon filter of pore size 0.2 µm and applied by spin-coating at 1000 rpm to the surface of a 0.6 mm thick, grooved polycarbonate disc of 120 mm diameter. The excess solution is spun off by increasing the rotational speed. On evaporation of the solvent, the dye remains behind in the form of a uniform, amorphous solid layer, the optical layer. After drying the optical layer in a circulating-air oven at 70°C (10 min) in a vacuum coating apparatus, a 100 µm thick silver layer is then applied to the recording layer by atomization. Then a 6 µm thick protective layer of a UV curable photopolymer (650-020, DSM) is applied thereto by means of spincoating. Finally, a second substrate is provided to combine with the resin protection layer using an attachment layer. This completes the manufacturing of a high-density recordable optical disc, the optical data recording medium.
Evaluation tests are performed using an optical disk evaluation device available from Pulse Tech Co., Ltd.
The testing conditions are the following ones:
- Numerical aperture (NA) of the optical head: 0.65
- Wavelength of a laser light for recording and reproduction: 405 nm
- Constant linear velocity (CLV): 6.61 m/sec.
- Track pitch: 400 nm
- Wobble amplitude of the groove track: 14 nm
- Groove depth: 90 nm.

Results obtained are summarized in the table (C).

| **Table (C)** | | | | | | |
|---|---|---|---|---|---|---|
| **Ex.** | **compound** | **Pw(mW)** | **SbER** | **PRSNR** | **modulation** | **reflectivity** |
| | **of formula** | | | | | |
| **1** | (1) | 7.1 | 7.50E-08 | 26.1 | 0.49 | 21.36 |
| **3** | (3) | 7.3 | 5.20E-08 | 28.6 | 0.49 | 22.72 |
| **5** | (5) | 7.3 | 2.00E-07 | 24 | 0.51 | 19.04 |
| **6** | (6) | 8.2 | 6.90E-06 | 19.1 | 0.40 | 20.18 |
| **7** | (7) | 8.4 | 1.00E-05 | 17.4 | 0.40 | 20.18 |

A test for evaluating a degree of degradation due to repetition reproduction is conducted for each of the write-once optical disks made for the described dye recording layers. Readings are carried out at a reading laser power of 0.4 mW and the degrees of degradation of PRSNR and SbER are then measured. Maximum cycle number was found within the specifications.

## Claims

1. Use of a compound of formula (I), 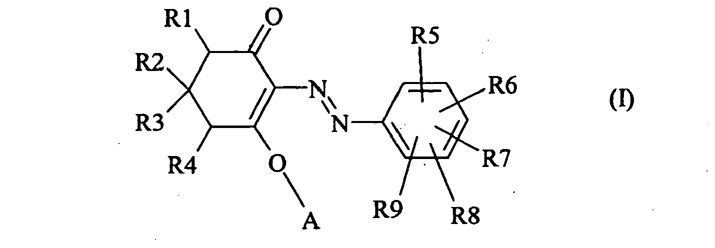 wherein
A represents H or a group of formula (II); 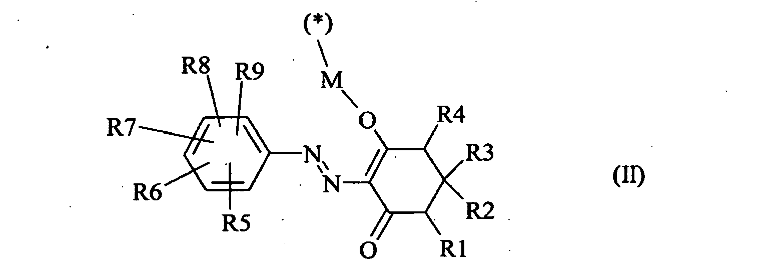
M represents a divalent metal atom;(*) in formula (II) denotes the bond of the divalent metal atom M to the O atom in formula (I);R¹ and R⁴ are independently from each other selected from the group consisting of H, CN, CF₃, NO₂, SO₂-NR²³R²⁴, CO-R²¹, SO₂R²¹, CO-NR²³R²⁴;
R² and R³ are independently from each other selected from the group consisting of H, C₁₋₁₀ alkyl, C₅₋₁₀ cycloalkyl and phenyl, the phenyl residue being unsubstituted or substituted by 1 to 4 substituents, the substituents being independently from each other selected from the group consisting of OH, halogen, CN, CF₃, NO₂, C₁₋₁₀ alkyl, C₅₋₁₀ cycloalkyl and C₁₋₁₀ alkoxy;
R⁵, R⁶, R⁷, R⁸ and R⁹ are independently of from each other selected from the group consisting of H, OH, halogen, CN, NO₂, C₁₋₁₂ alkyl, C₆₋₁₀aryl, NR²³R²⁴, C₆₋₁₀heteroaryl, the C₆₋₁₀heteroaryl residue having with 1, 2 or 3 heteroatoms independently from each other selected from the group consisting of O, N and S,
O- C₁₋₁₂ alkyl, S-C₁₋₁₂ alkyl, O-C₁₋₁₂ aryl, S-C₁₋₁₂ aryl, SO₂R²¹, SO₂-NR²³R²⁴, COR²¹, CO-NR²³R²⁴ and NHCOR²¹;
R²¹ are independently from each other selected from the group consisting of OH, C₁₋₆ alkyl, C₆₋₁₀ aryl and O-C₁₋₆ alkyl;
R²³ and R²⁴ are independently from each other selected from the group consisting of H, C₁₋₆ alkyl, C₆₋₁₀ aryl and C₁₋₁₂ alkyl- NR²³R²⁴;
in an optical layer for optical data recording.

2. Use of a compound of formula (I) according to claim 1, wherein
M is a divalent metal atom selected from the group consisting of Mg, Ca, Sr, Ba, Mn, Cu, Ni, Co, Zn and Fe
R¹ and R⁴ are independently from each other selected from the group consisting of H, CN, CF₃ and CO-R²¹;
R² and R³ are independently from each other selected from the group consisting of H, C₁₋₄ alkyl and phenyl;
R⁵, R⁶, R⁷, R⁸ and R⁹ are independently of from each other selected from the group consisting of H, OH, F, Cl, Br, CN, NO₂, C₁₋₄ alkyl, phenyl, NR²³R²⁴, O-C₁₋₄ alkyl, O-phenyl, SO₂R²¹, SO₂-NR²³R²⁴, COR²¹ and CO-NR²³R²⁴.
R²¹ are independently from each other selected from the group consisting of OH, C₁₋₄ alkyl, phenyl and O-C₁₋₄ alkyl;
R²³ and R²⁴ are independently from each other selected from the group consisting of H, C₁₋₄ alkyl, phenyl and C₂₋₆ alkyl- NR²³R²⁴.

3. Use of a compound of formula (I) according to one or more of claim 1 to 2, as a dye in an optical layer for optical data recording.

4. An optical layer for optical data recording comprising at least one compound of formula (I) as defined in claim 1 or 2.

5. A method for producing an optical layer as defined in claim 4, comprising the following steps
(a) providing a substrate,
(b) dissolving at least one compound of formula (I), as defined in claim 1 or 2, in an organic solvent to form a solution,
(c) coating the solution (b) on the substrate (a),
(d) evaporating the solvent to form an optical layer.

6. A method according to claim 5, wherein the substrate is polycarbonate (PC) or polymethylmethacrylate (PMMA).

7. A method according to claim 5 or 6, wherein the organic solvent is selected from C₁₋₈ alcohol, halogen substituted C₁₋₈ alcohols, C₁₋₈ ketone, C₁₋₈ ether, halogen substituted C₁₋₄ alkane, or amides.

8. An optical data recording medium comprising an optical layer as defined in claim 4.

9. A compound of formula (2), (3), (4), (5), (6), (7), (8), (9), (10), (11), (12), (13), (14), (15), (16), (17), (18), (19) or (20).

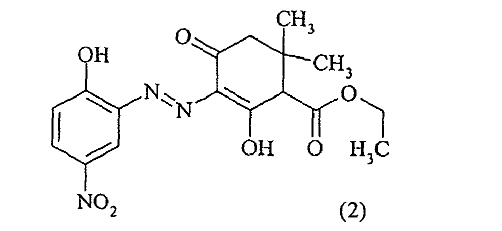

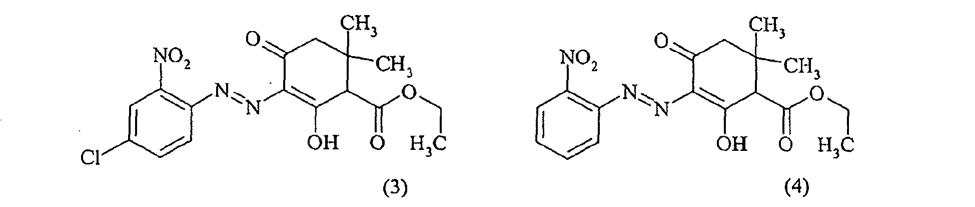

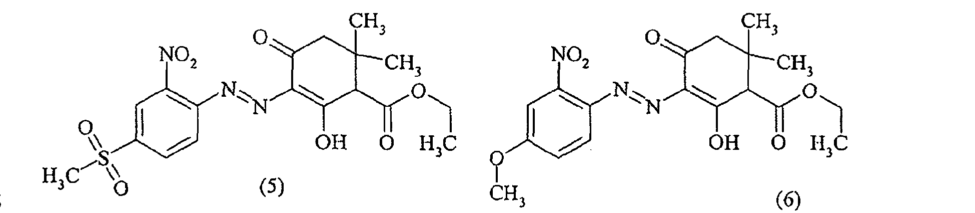

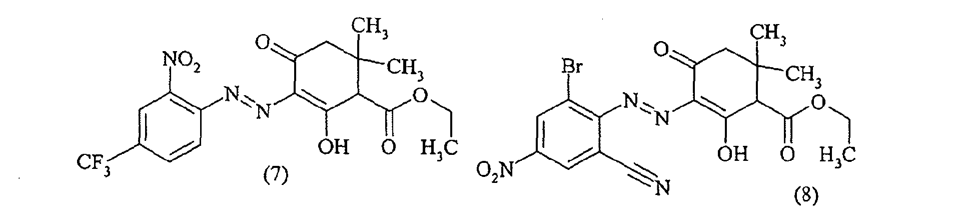

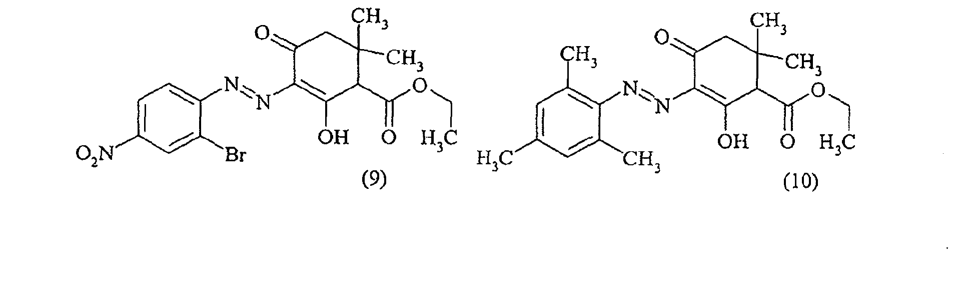

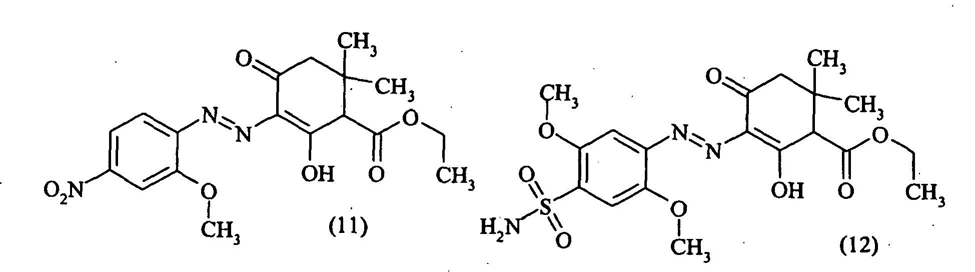

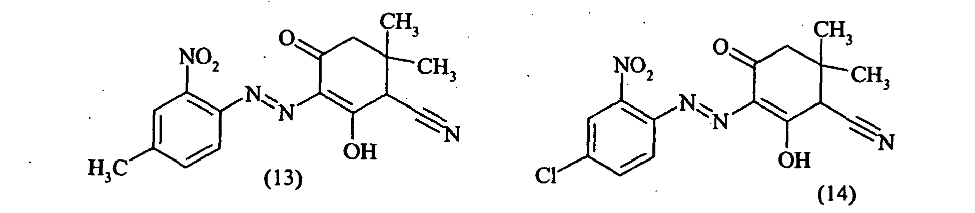

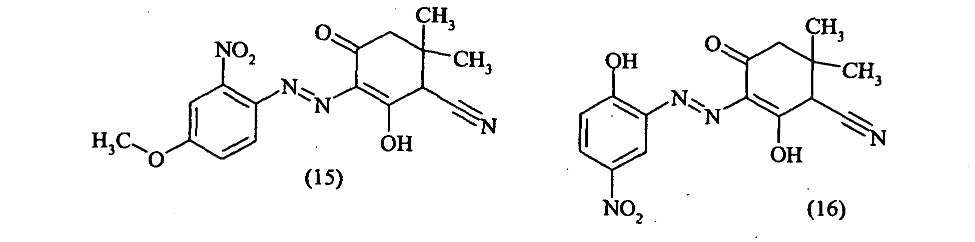

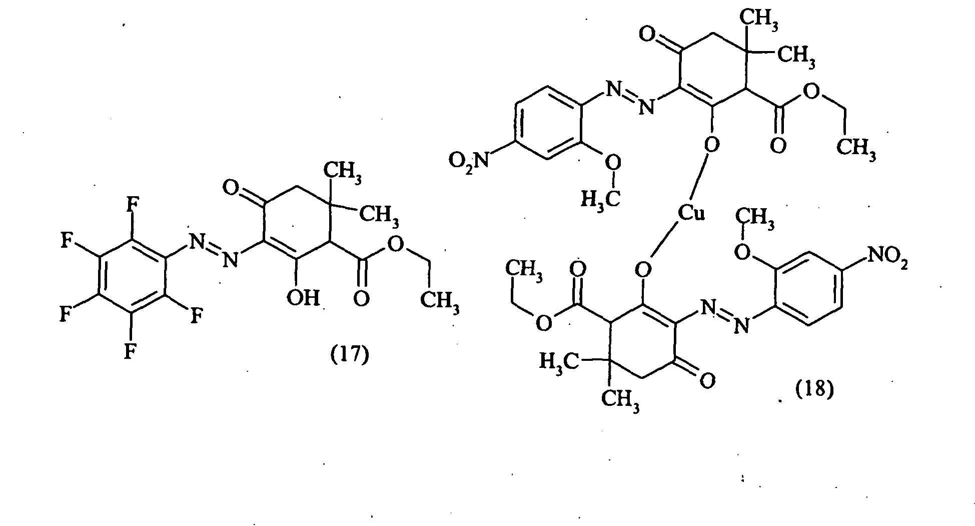

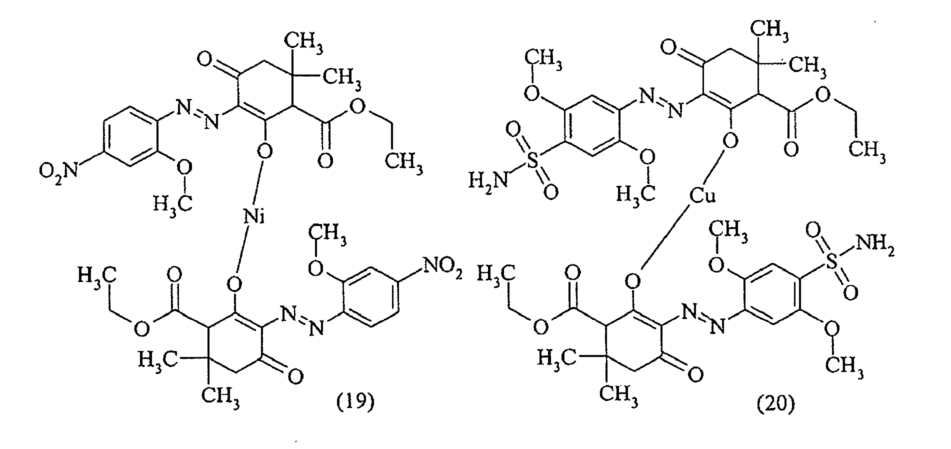

10. A process for the preparation of the compound of formula (2), (3), (4), (5), (6), (7), (8), (9), (10), (11), (12), (13), (14), (15), (16) or (17), as defined in claim 9, **characterized by** being an azo coupling reaction of the respective diazo component and coupling agent.

11. A process for the preparation of the compound of formula (18) or (19), as defined in claim 9, **characterized by** being a complexing reaction of a compound of the formula (11) with a Ni or Cu salt.

12. A process for the preparation of the compound of formula (20), as defined in claim 9, **characterized by** being a complexing reaction of a compound of the formula (12) with a Cu salt.

13. Use of a compound of formula (1) 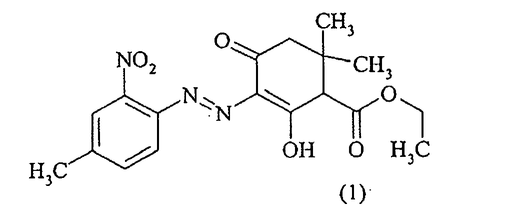 and of formula (2), (3), (4), (5), (6), (7), (8), (9), (10), (11), (12), (13), (14), (15), (16) and (17), as defined in claim 9, as a ligand in azo metal complex dyes.

14. Use of a compound of formula (1), as defined in claim 13, or (2), (3), (4), (5), (6), (7), (8), (9), (10), (11), (12), (13), (14), (15), (16), (17), (18), (19) or (20), as defined in claim 9, in an optical layer for optical data recording.

15. Use of a compound of formula (1), (2), (3), (4), (5), (6), (7), (8), (9), (10), (11), (12), (13), (14), (15), (16), (17), (18), (19) or (20), according to claim 15, as a dye in an optical layer for optical data recording.

## Patentansprüche

1. Verwendung einer Verbindung der Formel (I), 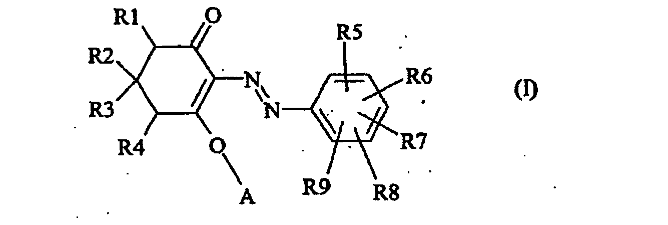 worin
A für H oder eine Gruppe der Formel (II) 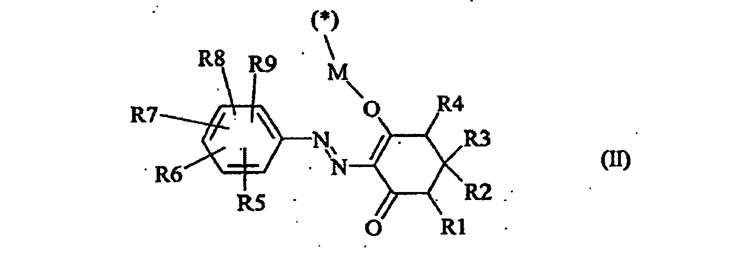 steht;
M für ein zweiwertiges Metallatom steht; (*) in Formel (II) die Bindung des zweiwertigen Metallatoms M an das O-Atom in Formel (I) bedeutet und R¹ und R⁴ unabhängig voneinander aus der Gruppe bestehend aus H, CN, CF₃, NO₂, SO₂-NR²³R²⁴, CO-R²¹, SO₂R²¹ und CO-NR²³R²⁴ ausgewählt sind;
R² und R³ unabhängig voneinander aus der Gruppe bestehend aus H, C₁₋₁₀-Alkyl, C₅₋₁₀-Cycloalkyl und Phenyl ausgewählt sind, wobei der Phenylrest gegebenenfalls durch 1 bis 4 Substituenten substituiert ist, wobei die Substituenten unabhängig voneinander aus der Gruppe bestehend aus OH, Halogen, CN, CF₃, NO₂, C₁₋₁₀-Alkyl, C₅₋₁₀-Cycloalkyl und C₁₋₁₀-Alkoxy ausgewählt sind;
R⁵, R⁶, R⁷, R⁸ und R⁹ unabhängig voneinander aus der Gruppe bestehend aus H, OH, Halogen, CN, NO₂, C₁₋₁₂-Alkyl, C₆₋₁₀-Aryl, NR²³R²⁴, C₆₋₁₀-Heteroaryl, wobei der C₆₋₁₀-Heteroarylrest 1, 2 oder 3 unabhängig voneinander aus der Gruppe bestehend aus O, N und S ausgewählte Heteroatome aufweist, O-C₁₋₁₂-Alkyl, S-C₁₋₁₂-Alkyl, O-C₁₋₁₂-Aryl, S-C₁₋₁₂-Aryl, SO₂R²¹, SO₂-NR²³R²⁴, COR²¹, CO-NR²³R²⁴ und NHCOR²¹ ausgewählt sind;
R²¹ unabhängig voneinander aus der Gruppe bestehend aus OH, C₁₋₆-Alkyl, C₆₋₁₀-Aryl und O-C₁₋₆-Alkyl ausgewählt sind;
R²³ und R²⁴ unabhängig voneinander aus der Gruppe bestehend aus H, C₁₋₆-Alkyl, C₆₋₁₀-Aryl und C₁₋₁₂-Alkyl-NR²³R²⁴ ausgewählt sind;
in einer optischen Schicht für die optische Datenaufzeichnung.

2. Verwendung einer Verbindung der Formel (I) nach Anspruch 1, wobei
M für ein zweiwertiges Metallatom aus der Gruppe bestehend aus Mg, Ca, Sr, Ba, Mn, Cu, Ni, Co, Zn und Fe steht;
R¹ und R⁴ unabhängig voneinander aus der Gruppe bestehend aus H, CN, CF₃ und CO-R²¹ ausgewählt sind;
R² und R³ unabhängig voneinander aus der Gruppe bestehend aus H, C₁₋₄-Alkyl und Phenyl ausgewählt sind;
R⁵, R⁶, R⁷, R⁸ und R⁹ unabhängig voneinander aus der Gruppe bestehend aus H, OH, F, Cl, Br, CN, NO₂, C₁₋₄-Alkyl, Phenyl, NR²³R²⁴, O-C₁₋₄-Alkyl, O-Phenyl, SO₂R²¹, SO₂-NR²³R²⁴, COR²¹ und CO-NR²³R²⁴ ausgewählt sind;
R²¹ unabhängig voneinander aus der Gruppe bestehend aus OH, C₁₋₄-Alkyl, Phenyl und O-C₁₋₄-Alkyl ausgewählt sind;
R²³ und R²⁴ unabhängig voneinander aus der Gruppe bestehend aus H, C₁₋₄-Alkyl, Phenyl und C₂₋₆-Alkyl-NR²³R²⁴ ausgewählt sind.

3. Verwendung einer Verbindung der Formel (I) nach einem oder mehreren der Ansprüche 1 bis 2 als Farbstoff in einer optischen Schicht für die optische Datenaufzeichnung.

4. Optische Schicht für die optische Datenaufzeichnung, die mindestens eine Verbindung der Formel (I) gemäß Anspruch 1 oder 2 enthält.

5. Verfahren zur Herstellung einer optischen Schicht gemäß Anspruch 4, bei dem man
(a) ein Substrat bereitstellt,
(b) mindestens eine Verbindung der Formel (I) gemäß Anspruch 1 oder 2 in einem organischen Lösungsmittel löst, wobei man eine Lösung erhält,
(c) die Lösung (b) auf das Substrat (a) aufträgt,
(d) das Lösungsmittel verdampft, wobei man eine optische Schicht erhält.

6. Verfahren nach Anspruch 5, bei dem es sich bei dem Substrat um Polycarbonat (PC) oder Polymethylmethacrylat (PMMA) handelt.

7. Verfahren nach Anspruch 5 oder 6, bei dem man das organische Lösungsmittel unter C₁₋₈-Alkohol, halogensubstituierten C₁₋₈-Alkoholen, C₁₋₈-Keton, C₁₋₈-Ether, halogensubstituiertem C₁₋₄-Alkan oder Amiden auswählt.

8. Optisches Aufzeichnungsmedium mit einer optischen Schicht gemäß Anspruch 4.

9. Verbindung der Formel (2), (3), (4), (5), (6), (7), (8), (9), (10), (11), (12), (13), (14), (15), (16), (17), (18), (19) oder (20).

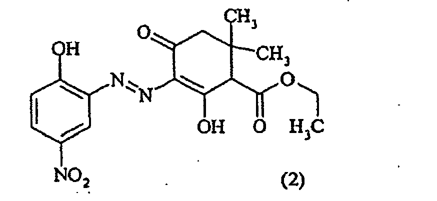

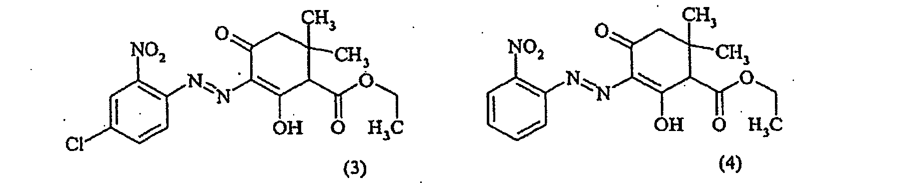

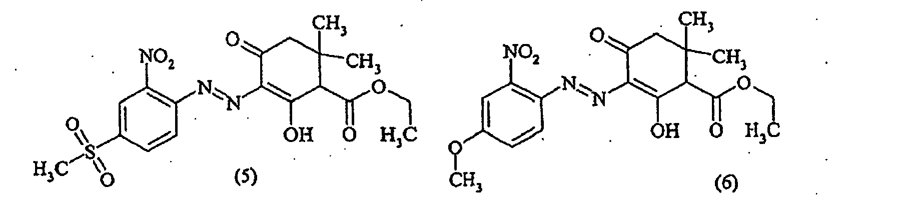

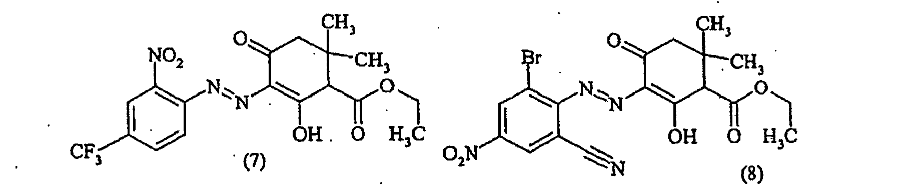

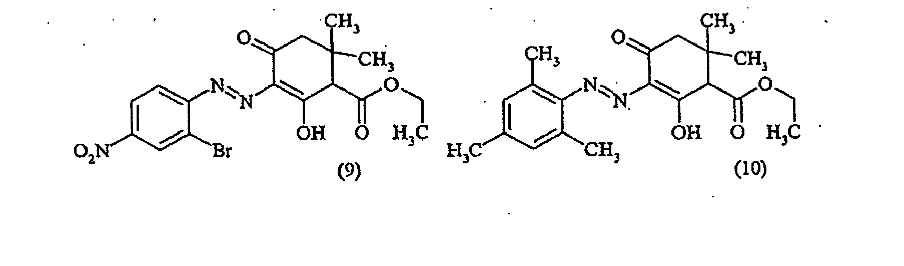

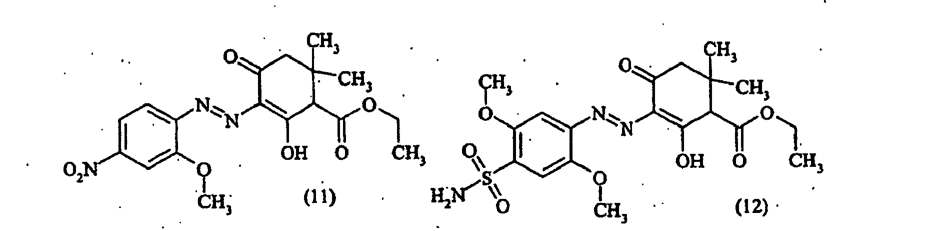

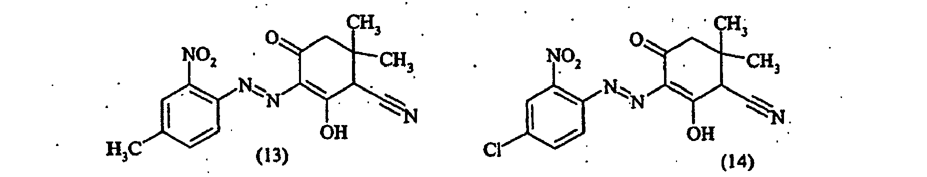

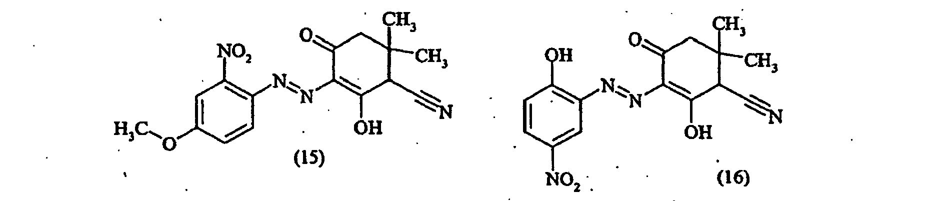

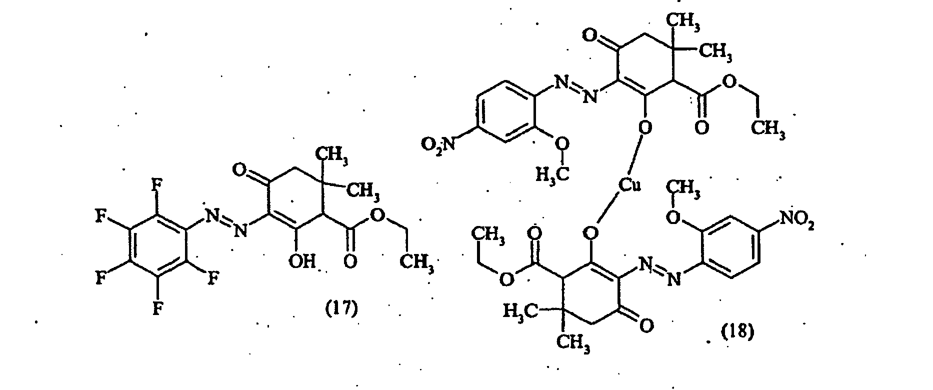

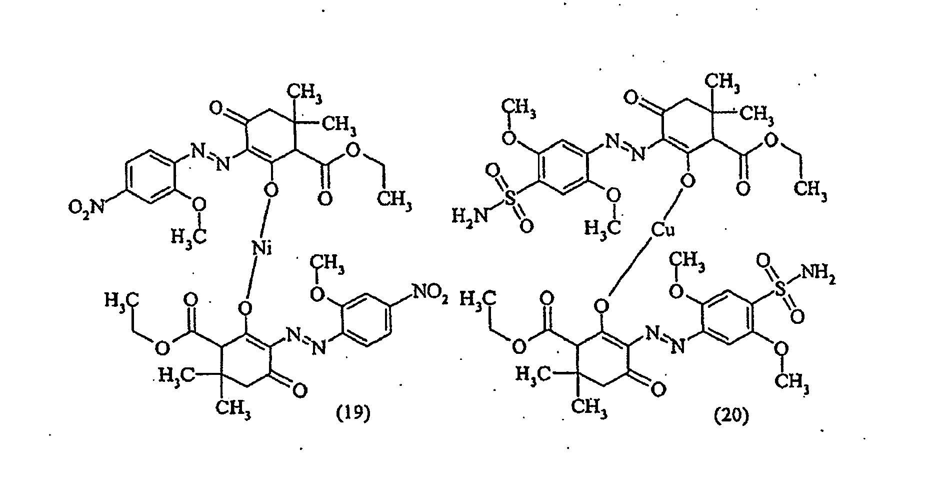

10. Verfahren zur Herstellung der Verbindung der Formel (2), (3), (4), (5), (6), (7), (8), (9), (10), (11), (12), (13), (14), (15), (16) oder (17) gemäß Anspruch 9, **dadurch gekennzeichnet, daß** es sich um eine Azokupplungsreaktion der jeweiligen Diazokomponente und des jeweiligen Kupplungsmittels handelt.

11. Verfahren zur Herstellung der Verbindung der Formel (18) oder (19) gemäß Anspruch 9, **dadurch gekennzeichnet, daß** es sich um eine Komplexierungsreaktion einer Verbindung der Formel (11) mit einem Ni- bzw. Cu-Salz handelt.

12. Verfahren zur Herstellung der Verbindung der Formel (20) gemäß Anspruch 9, **dadurch gekennzeichnet, daß** es sich um eine Komplexierungsreaktion einer Verbindung der Formel (12) mit einem Cu-Salz handelt.

13. Verwendung einer Verbindung der Formel (1) 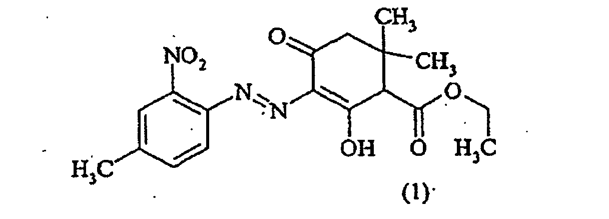 und der Formel (2), (3), (4), (5), (6), (7), (8), (9), (10), (11), (12), (13), (14), (15), (16) und (17) gemäß Anspruch 9 als Ligand in Azometallkomplexfarbstoffen.

14. Verwendung einer Verbindung der Formel (1) gemäß Anspruch 13 oder (2), (3), (4), (5), (6), (7), (8), (9), (10), (11), (12), (13), (14), (15), (16), (17), (18), (19) oder (20) gemäß Anspruch 9 in einer optischen Schicht für die optische Datenaufzeichnung.

15. Verwendung einer Verbindung der Formel (1), (2), (3), (4), (5), (6), (7), (8), (9), (10), (11), (12), (13), (14), (15), (16), (17), (18), (19) oder (20) gemäß Anspruch 15 als Farbstoff in einer optischen Schicht für die optische Datenaufzeichnung.

## Revendications

1. Utilisation d'un composé de formule (I), 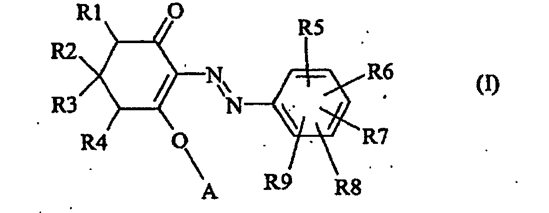 dans laquelle
A représente H ou un groupement de formule (II) ; 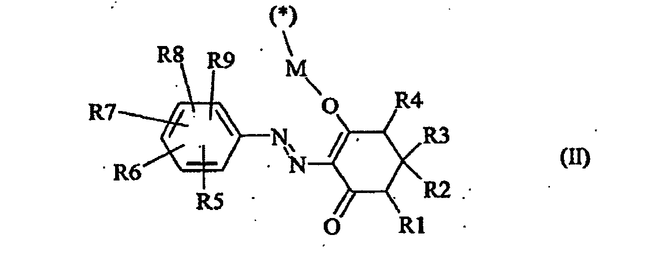
M représente un atome de métal divalent ; (*) dans la formule (II) désigne la liaison de l'atome de métal divalent M à l'atome O dans la formule (I) ; R¹ et R⁴ sont indépendamment l'un de l'autre choisis dans le groupe constitué de H, CN, CF₃, NO₂, SO₂-NR²³R²⁴, CO-R²¹, SO₂R²¹ et CO-NR²³R²⁴ ;
R² et R³ sont indépendamment l'un de l'autre choisis dans le groupe constitué de H, C₁₋₁₀ alkyle, C₅₋₁₀ cycloalkyle et phényle, le résidu phényle étant non substitué ou substitué par 1 à 4 substituants, les substituants étant indépendamment les uns des autres choisis dans le groupe constitué de OH, halogène, CN, CF₃, NO₂, C₁₋₁₀ alkyle, C₅₋₁₀ cycloalkyle et C₁₋₁₀ alcoxy ;
R⁵, R⁶, R⁷, R⁸ et R⁹ sont indépendamment les uns des autres choisis dans le groupe constitué de H, OH, halogène CN, NO₂, C₁₋₁₂ alkyle, C₆₋₁₀ aryle, NR²³R²⁴, C₆₋₁₀ hétéroaryle, le résidu C₆₋₁₀ hétéroaryle ayant 1, 2 ou 3 hétéroatomes indépendamment les uns des autres choisis dans le groupe constitué de O, N et S,
O-C₁₋₁₂ alkyle, S-C₁₋₁₂ alkyle, O-C₁₋₁₂ aryle, S-C₁₋₁₂ aryle, SO₂R²¹, SO₂-NR²³R²⁴, COR²¹, CO-NR²³R²⁴ et NHCOR²¹ ;
R²¹ sont indépendamment les uns des autres choisis dans le groupe constitué de OH, C₁₋₆ alkyle, C₆₋₁₀ aryle et O-C₁₋₆ alkyle ;
R²³ et R²⁴ sont indépendamment l'un de l'autre choisis dans le groupe constitué de H, C₁₋₆ alkyle, C₆₋₁₀ aryle et C₁₋₁₂ alkyl-NR²³R²⁴ ;
dans une couche optique pour l'enregistrement des données optiques.

2. Utilisation d'un composé de formule (I) selon la revendication 1, **caractérisée en ce que**
M est un atome de métal divalent choisi dans le groupe constitué de Mg, Ca, Sr, Ba, Mn, Cu, Ni, Co, Zn et Fe ;
R¹ et R⁴ sont indépendamment l'un de l'autre choisis dans le groupe constitué de H, CN, CF₃ et CO-R²¹ ;
R² et R³ sont indépendamment l'un de l'autre choisis dans le groupe constitué de H, C₁₋₄ alkyle et phényle ;
R⁵, R⁶, R⁷, R⁸ et R⁹ sont indépendamment l'un de l'autre choisis dans le groupe constitué de H, OH, F, Cl, Br CN, NO₂, C₁₋₄ alkyle, phényle, NR²³R²⁴, O-C₁₋₄ alkyle, O-phényle, SO₂R²¹, SO₂-NR²³R²⁴, COR²¹ et CO-NR²³R²⁴ ;
R²¹ sont indépendamment les uns des autres choisis dans le groupe constitué de OH, C₁₋₄ alkyle, phényle et O-C₁₋₄ alkyle ;
R²³ et R²⁴ sont indépendamment l'un de l'autre choisis dans le groupe constitué de H, C₁₋₄ alkyle, phényle et C₂₋₆ alkyl-NR²³R²⁴.

3. Utilisation d'un composé de formule (I) selon l'une ou l'autre des revendications 1 et 2, comme colorant dans une couche optique pour l'enregistrement des données optiques.

4. Couche optique pour l'enregistrement des données optiques comprenant au moins un composé de formule (I) tel que défini dans la revendication 1 ou 2.

5. Méthode de production d'une couche optique telle que définie dans la revendication 4, comprenant les étapes suivantes
(a) l'obtention d'un substrat,
(b) la dissolution d'au moins un composé de formule (I), tel que défini dans la revendication 1 ou 2, dans un solvant organique pour former une solution,
(c) l'enrobage du substrat (a) par la solution (b),
(d) l'évaporation du solvant pour former une couche optique.

6. Méthode selon la revendication 5, **caractérisée en ce que** le substrat est le polycarbonate (PC) ou le polyméthylméthacrylate (PMMA).

7. Méthode selon la revendication 5 ou 6, **caractérisée en ce que** le solvant organique est choisi parmi les alcools en C₁₋₈, les alcools en C₁₋₈ substitués par des halogènes, des cétones en C₁₋₈, des éthers en C₁₋₈, des alcanes en C₁₋₄ substitués par des halogènes, ou des amides.

8. Milieu d'enregistrement des données optiques comprenant une couche optique telle que définie dans la revendication 4.

9. Composé de formule (2), (3), (4), (5), (6), (7), (8), (9), (10), (11), (12), (13), (14), (15), (16), (17), (18), (19) ou (20).

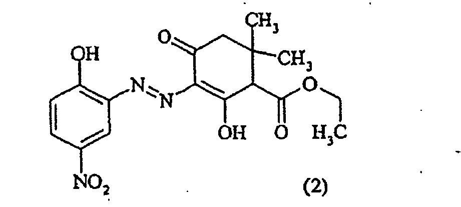

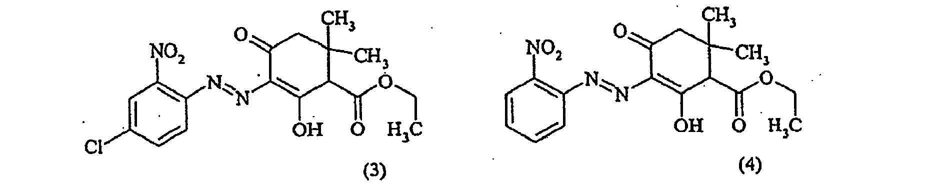

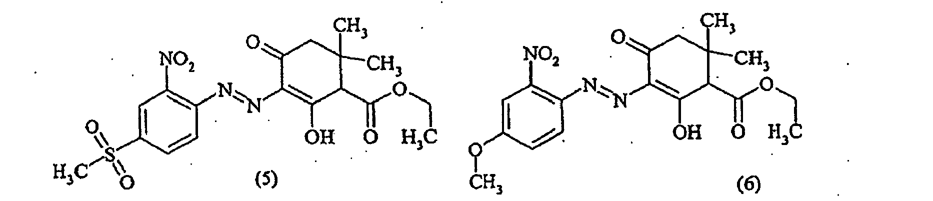

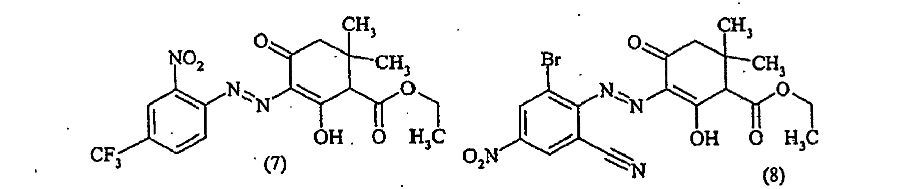

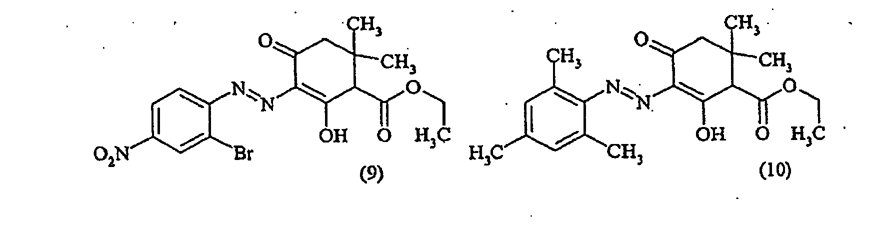

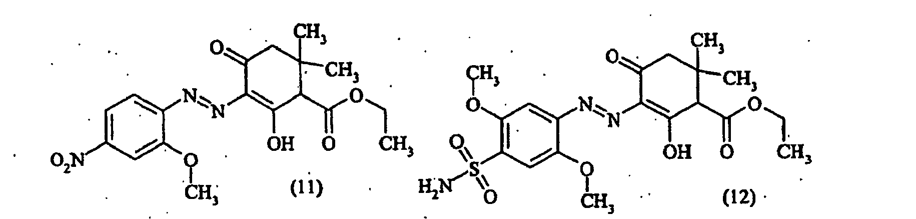

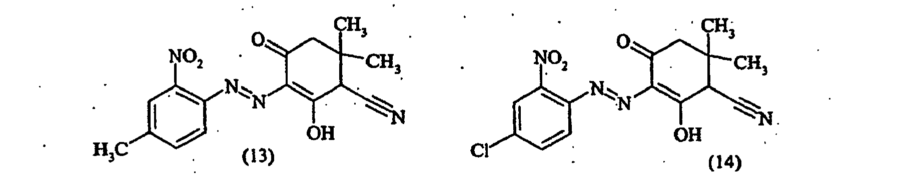

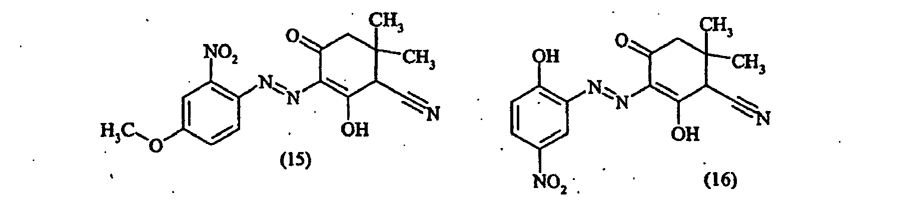

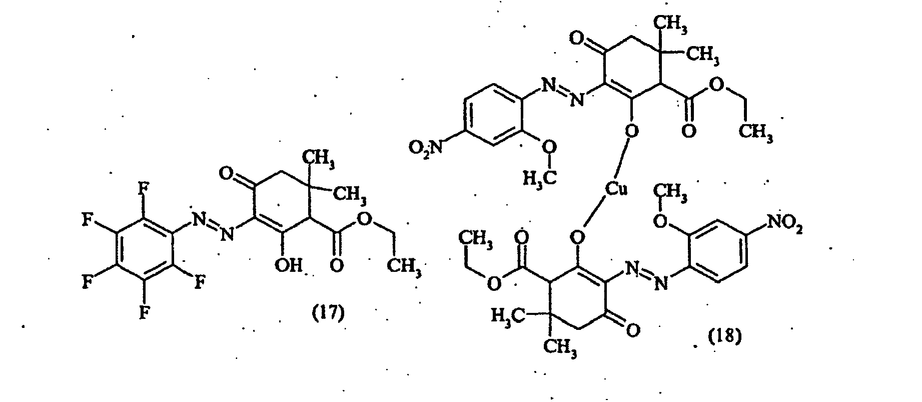

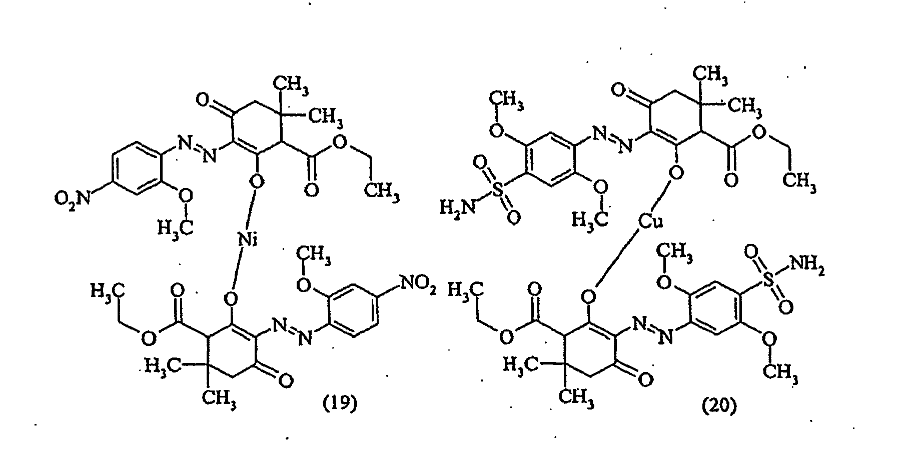

10. Procédé de préparation du composé de formule (2), (3), (4), (5), (6), (7), (8), (9), (10), (11), (12), (13), (14), (15), (16) ou (17), tel que défini dans la revendication 9, **caractérisé par** le fait d'être une réaction de couplage d'azoïque du composé diazoïque et de l'agent de couplage respectifs.

11. Procédé de préparation du composé de formule (18) ou (19), tel que défini dans la revendication 9,
**caractérisé par** le fait d'être une réaction de complexation d'un composé de formule (11) avec un sel de Ni ou Cu.

12. Procédé de préparation du composé de formule (20), tel que défini dans la revendication 9, **caractérisé par** le fait d'être une réaction de complexation d'un composé de formule (12) avec un sel de Cu.

13. Utilisation d'un composé de formule (1) 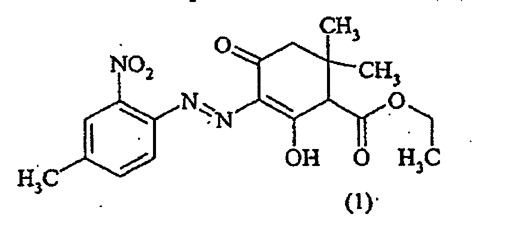 et de formule (2), (3), (4), (5), (6), (7), (8), (9), (10), (11), (12), (13), (14), (15), (16) ou (17), tel que défini dans la revendication 9, comme ligand dans des colorants de complexe azoïque-métal.

14. Utilisation d'un composé de formule (1), tel que défini dans la revendication 13, ou (2), (3), (4), (5), (6), (7), (8), (9), (10), (11), (12), (13), (14), (15), (16), (17), (18), (19) ou (20), tel que défini dans la revendication 9, dans une couche optique pour l'enregistrement des données optiques.

15. Utilisation d'un composé de formule (1), (2), (3), (4), (5), (6), (7), (8), (9), (10), (11), (12), (13), (14), (15), (16), (17), (18), (19) ou (20), selon la revendication 15, comme colorant dans une couche optique pour l'enregistrement des données optiques.
